# EUROPÄISCHE PATENTSCHRIFT

(11) **EP 2 755 001 B1**
(45) Veröffentlichungstag und Bekanntmachung des Hinweises auf die Patenterteilung: **18.05.2016**
(21) Anmeldenummer: 13005990.0
(22) Anmeldetag: 20.12.2013
(51) Int. Cl.: G01F 15/14, G01F 15/18

(54) **Einsatz zur Verbindung einer Wasserzähleinrichtung mit einer Rohrleitung**
Insert for the connection of a water meter to a pipeline
Insert permettant de relier un système de compteur d'eau à une conduite

(30) Priorität: 10.01.2013 DE 202013000221 U
(43) Veröffentlichungstag der Anmeldung: 16.07.2014
(73) Patentinhaber: Gebr. Kemper GmbH + Co. KG Metallwerke, 57462 Olpe (DE)
(72) Erfinder: Kelbassa, Rainer, 57439 Attendorn (DE)
(74) Vertreter: Grünecker Patent- und Rechtsanwälte PartG mbB

(56) Entgegenhaltungen:
- EP-A1- 1 416 097
- DE-A1- 10 062 048
- JP-A- 2001 021 404
- KR-B1- 100 981 985
- US-A- 5 557 041
- US-B1- 8 020 575

## Beschreibung

Die vorliegende Erfindung betrifft einen Einsatz zur Verbindung einer Wasserzähleinrichtung mit einer Rohrleitung mit den oberbegrifflichen Merkmalen von Anspruch 1. Ein gattungsgemäßer Einsatz ist beispielsweise aus der EP 1 416 097 A1 bekannt.

Einsätze zur Verbindung einer Wasserzähleinrichtung mit einer Rohrleitung sind allgemein bekannt und üblicherweise auch jeweils in über- bzw. nebeneinander angeordneten Nasszellen oder Wohnungen eines Ein- oder Mehrfamilienhauses montiert. In ein Stück der Rohrleitung ist üblicherweise der Einsatz mit seiner Auslass- und Einlassöffnung eingebaut. In eine Wasserzähleinrichtungseinsatzöffnung ist eine Wasserzähleinrichtung eingesetzt. Eine solche Wasserzähleinrichtung ermöglicht dementsprechend eine Verbrauchserfassung der jeweiligen Nasszelle oder Wohnung, die dem einzelnen Bewohner zugeordnet ist.

Insbesondere bei der Trinkwasserversorgung werden zunehmend höhere Anforderungen an die Wasserqualität gestellt. Dabei geht es vor allem um keimfreies Warm- und/oder Kaltwasser und die Entnahme eines solchen keimfreien Wassers.

Aufgrund von gesetzlichen Regelungen ist es oftmals notwendig, insbesondere Warmwasser führende Rohrleitungen innerhalb eines Gebäudes in regelmäßigen Abständen auf Keimfreiheit zu untersuchen. Üblicherweise wird hierfür warmes Wasser aus dem Gebäudewassersystem direkt hinter einem Boiler abgezapft und zusätzlich an der entferntest gelegenen Stelle des Wassersystems, insbesondere also in einer Wohnung des obersten Stockwerks, die von dem Boiler aus am weitest entfernt gelegen ist.

Direkt hinter dem Boiler ist üblicherweise in die Rohrleitung an diesen eine Probenahmeeinheit, wie beispielsweise ein Wasserhahn eingesetzt, mit dem eine Teilströmung des durch die Rohrleitung geleiteten warmen Wassers abgezapft werden kann, welche dann zur Kontrolle gesammelt wird. Zur Kontrolle des Wasser in der entferntest gelegenen Wohnung wird üblicherweise Wasser an dem entferntest gelegenen Verbraucher beispielsweise direkt an einer Mischarmatur entnommen.

Weitere Einsätze zur Verbindung einer Wasserzähleinrichtung mit einer Rohrleitung sind beispielsweise aus der US 8 020 575 B1, der JP 2001-021404 A, der US 5 557 041 A sowie der KR 100 981 985 B1 bekannt.

Ein Montagebaustein, in dem eine Unterputzabsperramatur und ein Unterputzwasserzählerunterteil eingebettet sind, welche zwischen zwei Löt- oder Gewindeanschlussstutzen positioniert sind ist aus der DE 100 62 048 A1 bekannt.

Der vorliegenden Erfindung liegt das Problem zugrunde, einen den zuvor beschriebenen Anforderung genügenden Einsatz zur Verbindung eines Wasserzählers mit einer Rohrleitung anzugeben.

Das zuerst genannte Problem wird mit der vorliegenden Erfindung mit einem Einsatz mit den Merkmalen von Anspruch 1 gelöst.

Der erfindungsgemäße Einsatz bildet den aus der EP 1 416 097 A1 bekannten Einsatz durch die Merkmale im Kennzeichen von Anspruch 1 weiter.

Das Rohrgebilde ist erfindungsgemäß innerhalb eines Unterputzmontagekastens aufgenommen. Der Unterputzmontagekasten umgibt demnach das Rohrgebilde und bildet Funktionsflächen aus, die vorzugsweise planar sind und an welchen der Einsatz innerhalb der Wand - eben unter dem Putz - montiert werden kann. Ein solcher Unterputzmontagekasten ist beispielsweise aus der EP 0 853 753 B1 bekannt, deren Offenbarungsgehalt, insbesondere in Bezug auf den Unterputzmontagekasten sowie das Rohrgebilde mit diesem Verweis integriert wird.

In diesem Unterputzmontagekasten ist vorzugsweise das Rohrgebilde gehalten, welches sich üblicherweise von einer Stirnseite des Unterputzmontagekastens zu einer gegenüberliegenden Stirnseite des Unterputzmontagekastens erstreckt, wobei die Stirnseiten des Unterputzmontagekastens jeweils die Seiten des Unterputzmontagekastens sind, die senkrecht zu einer putzseitigen Oberfläche des Unterputzmontagekastens ausgeführt sind, sich also senkrecht zu einer Gebäudewandoberfläche erstrecken. Ein solcher vorzugsweise quaderförmig nach Art eines Schuhkartons ausgebildeter Unterputz-Montagekasten nimmt das Rohrgebilde in sich auf, so dass dieser Einsatz als separate Einheit mit einer in dem Gebäude verlaufenden Rohrleitung verbunden werden kann.

Dieser Unterputzmontagekasten kann in eine Ausnehmung in der Wand eingebracht werden. Hierbei ist darauf zu achten, dass die Wasserzähleinrichtungseinsatzöffnung bzw. die Probenahmeöffnung nicht unter Putz liegen und dementsprechend von außen an der Wand frei zugänglich sind.

Demnach sind nach einer bevorzugten Weiterbildung der Erfindung sowohl eine an dem Unterputzmontagekasten vorgesehene Wasserzähleinrichtungsausnehmung als auch eine an dem Unterputzmontagekasten vorgesehene Probenahmeausnehmung an der putzseitigen Oberfläche des Unterputzmontagekastens vorgesehen, wohingegen eine an dem Unterputzmontagekasten vorgesehene Auslassausnehmung und eine an dem Unterputzmontagekasten vorgesehene Einlassausnehmung jeweils auf vorzugsweise sich einander gegenüberliegenden Stirnseiten in einer Umfangsrichtung des Unterputzmontagekastens angeordnet sind. Eine Ausnehmung des Unterputzmontagekastens in diesem Sinne ist eine Öffnung, durch die jeweils die Einlassöffnung, die Auslassöffnung, die Wasserzähleinrichtungseinsatzöffnung bzw. die Probeentnahmeöffnung an dem Rohrgebilde von außen frei zugänglich sind.

An dem Rohrgebilde und zwar zwischen der Einlassöffnung und der Wasserzähleinrichtungseinsatzöffnung ist eine Absperrventilaufnahme vorgesehen. In diese Absperrventilaufnahme kann ein Absperrventil eingesetzt werden, das den Fluss des Wassers zu der Wasserzähleinrichtung bzw. von der Einlassöffnung zu der Auslassöffnung des Rohrgebildes komplett unterbricht. Eine solche Absperrventilaufnahme ist derart ausgebildet, dass es nach Einsetzen des Absperrventils in das Rohrgebilde bei geschlossenem Absperrventil zu einer Unterbrechung des Flusses im Rohrgebilde kommt. Im Gegensatz dazu ist die Probenahmeöffnung derart ausgebildet, dass das Wasser während es durch das Rohrgebilde über den Wasserzähler fließt, bei geschlossener an die Probenahmeöffnung angeschlossener Probenahmeeinheit nicht unterbrochen wird, sondern nur ein Teil des Wasser durch die Probeentnahmeöffnung abgezweigt wird und durch die Probenahmeeinheit zur Beprobung ausgeleitet wird.

Die Absperrventilaufnahme enthält eine Absperrventilaufnahmeöffnung zum Einsetzen des Absperrventils dessen Durchmesser größer als der Durchmesser der Probenahmeöffnung. Der Durchmesser der Absperrventilaufnahmeöffnung ist üblicherweise größer als 3/8", insbesondere von 10 mm bis zu 20 mm; insbesondere bis zu 50 mm. Im Gegensatz dazu beträgt der Durchmesser der Probenahmeöffnung maximal 3/8", vorzugsweise genau 3/8".

So kann ein an sich bekanntes Absperrventil, das vorzugsweise mit einem Ventilsitz innerhalb des Rohrgebildes zusammenwirkt, in den Zuleitungsrohrbereich zwischen der Einlassöffnung und der Wasserzähleinrichtungseinsatzöffnung eingesetzt werden. Das Absperrventil ragt üblicherweise in das Rohrgebilde bzw. den genannten Rohrbereich hinein. Die Probenahmeöffnung ist dem gegenüber kleiner ausgeführt, da kein Ventil in die Probenahmeöffnung und damit in den Rohrbereich (Ableitungsrohrbereich) zwischen der Wasserzähleinrichtungseinsatzöffnung und der Einlassöffnung hineinragt. Vielmehr ist an die Probenahmeöffnung in der Regel die Entnahmeeinrichtung angeschlossen, deren Absperrventil üblicherweise lediglich in ein von der Entnahmeöffnung abgehendes Rohrstück hineinragt.

Vorzugsweise ist ein solcher Einsatz als einheitliches Bauelement direkt in eine Rohrleitung einsetzbar. Hierzu wird die Einlassöffnung derart an die Rohrleitung angeschlossen, dass das Wasser durch die Einlassöffnung in den Einsatz hineinfließt. Über die Auslassöffnung wird das Wasser nach Durchfluss durch den Einsatz wieder an die Rohleitung abgegeben. Zwischen dem Einlass und dem Auslass ist die Wasserzähleinrichtungseinsatzöffnung vorgesehen, welche mit der Einlassöffnung und mit der Auslassöffnung strömungsmäßig kommuniziert. Unter Zwischenschaltung einer Wasserzähleinrichtung, wie beispielsweise eines Flügelradwasserzählers, kann so die durch den Einsatz strömende Wassermenge bestimmt werden.

Der Einsatz selber ist zwar vorzugsweise als separates einheitliches Bauelement vorgesehen, das als Ganzes zwischen zwei vorzugsweise in Verlängerung zueinander aber beabstandet vorgesehene Rohrleitungsstücke angeschlossen wird, kann jedoch für sich einteilig oder mehrteilig ausgebildet sein.

Teil des Einsatzes ist zumindest ein Rohrgebilde, das verschiedenartige Rohrfunktionsbereiche ausbildet, an welche Funktionselemente wie die Wasserzählereinheit, eine Zuleitung oder Ableitung und auch die Probenahmeeinheit angeschlossen werden können. Das Rohrgebilde ist vorzugsweise als einheitliches Gussteil aus Metall oder Kunststoff gebildet, kann jedoch auch aus einzelnen separat voneinander jedoch zusammengeschlossenen Rohrstücken gebildet werden, die vorzugsweise die einzelnen Funktionsbereiche definieren. In diesem Zusammenhang ist der Begriff "Stück" als separates Element zu verstehen, wohingegen soweit auf "Bereich" abgestellt wird, das Element einheitlich als auch mehrteilig aus mehreren Stücken ausgebildet sein kann.

Die Einlassöffnung des Rohgebildes ist vorzugsweise hierbei an einem Einlassstutzen vorgesehen und die Auslassöffnung an einem Auslassstutzen, so dass der Einlass- bzw. Auslassstutzen mit einem Rohrleitungsbereich des Rohrleitungssystems über an sich bekannten Maßnahmen wie Flanschverbindung, Verschweißen oder Verschrauben angeschlossen werden kann.

Zwischen der Wasserzähleinrichtungseinsatzöffnung und der Auslassöffnung ist die Probenahmeöffnung vorgesehen. Im einfachsten Fall kann eine solche Probenahmeöffnung durch ein in einer Außenumfangsfläche eines Rohrbereichs vorgesehene Öffnung (d.h. ein Loch) gebildet werden. Hierbei geht die Erfindung davon aus, dass zwischen der Wasserzähleinrichtungseinsatzöffnung und der Auslassöffnung ein im Wesentlichen zylindrisch ausgeführter Rohrbereich vorgesehen ist, über den die genannten Öffnungen strömungsmäßig miteinander kommunizieren. Im einfachsten Fall enthält das Rohrgebilde demnach vier Öffnungen, nämlich die Einlassöffnung, die Auslassöffnung, die Wasserzähleinrichtungseinsatzöffnung und die Probenahmeöffnung.

Im Gegensatz zu einem üblicherweise bekanntermaßen zuleitungsseitig vor der Wasserzähleinrichtungseinsatzöffnung vorgesehenen Absperrventil, das durch eine entsprechende Öffnung in das Rohrgebilde hineinragt, bzw. in einen zwischen der Einlassöffnung und der Wasserzähleinrichtungseinsatzöffnung vorgesehenen Zuleitungsrohrbereich hineinragt, der über die zuvor genannten Öffnungen strömungsmäßig miteinander kommuniziert, ist die Probenahmeöffnung auslassseitig vorgesehen. Die tatsächliche Ausgestaltung des Rohrverlaufs des Rohrgebildes und innerhalb dieses eventuell vorgesehener Trennwandbereiche und/oder Rohrbiegungen und/oder Versatze legen hierbei fest, in welcher Richtung das Wasser durch das Rohrgebilde hindurchströmt, d.h. wie das Rohrgebilde anzuschließen ist.

Üblicherweise wird das in den Einsatz einlaufende Wasser zuerst in einen radial äußeren Bereich der Wasserzähleinrichtungseinsatzöffnung, der über eine radial innen liegende vorgesehene Trennwandung von einem radial innen liegenden Rohrbereich getrennt ist, eingeleitet, bevor es durch die Wasserzählereinrichtung, insbesondere über Außenbereiche eines Flügelrades eines Flügelradwasserzählers leckagefrei in den innen liegenden Rohrbereich der Wasserzähleinrichtungseinsatzöffnung fließt.

Die Probenahmeöffnung bietet die Möglichkeit der Entnahme von Wasser in Strömungsrichtung hinter der Wasserzähleinrichtung und damit innerhalb der Nasszelle bzw. einer dem Wasserzähler zugeordneten Wohnungseinheit.

Durch die Probenahmeöffnung des erfindungsgemäßen Einsatzes und Wasserzählers der diesen Einsatz enthält ist die Möglichkeit geschaffen, innerhalb der Nasszelle oder Wohnung eine Probe zu ziehen, um das in der Ringleitung/Rohrleitung befindliche Wasser auf seine Reinheit hin zu überprüfen.

Die Anordnung der Probenahmeöffnung zwischen der Wasserzähleinrichtung und der Auslassöffnung verhindert Manipulationen durch Wasserentnahme beim Verbraucher vor der Wasserzähleinrichtung. So wird auch eine Wasserentnahme durch die Probenentnahmeöffnung von der Wasserzähleinrichtung erfasst und kann der jeweiligen Verbrauchseinheit zugewiesen werden.

Vorzugsweise enthält das Rohrgebilde bei dieser Weiterbildung einen Einlassstutzen und einen Auslassstutzen, an dem die Einlass- bzw. Auslassöffnung vorgesehen ist, der durch die Einlassausnehmung bzw. die Auslassausnehmung des Unterputzmontagekastens über diesen hinausragt. Im Bereich der Wasserzähleinrichtungseinsatzöffnung ist das Rohrgebilde vorzugsweise derart verbreitert, dass bei Draufsicht auf die putzseitige Oberfläche des Unterputzmontagekastens eine mindestens 4 cm große Öffnung, vorzugsweise 8 cm große öffnung, ganz bevorzugt 12 cm große Öffnung, insbesondere eine zylindrische Öffnung gebildet wird. Aus der putzseitigen Oberfläche des Unterputzmontagekastens ragt durch die Wasserzähleinrichtungsausnehmung und die Probeentnahmeausnehmung vorzugsweise jedenfalls kein Stutzen heraus, so dass die jeweilige Probenahmeöffnung bzw. die Wasserzähleinrichtungseinsatzöffnung in einer oder mehreren verschiedenen Ebenen unterhalb der Oberfläche (putzseitigen Oberfläche) des eingeputzten Unterputzmontagekastens liegt.

Gemäß einer bevorzugten Weiterbildung der Erfindung nach Anspruch 2 enthält die Absperrventilaufnahme einen innerhalb des Rohrgebildes und integral an diesem in dem Zuleitungsrohrbereich zwischen der Einlassöffnung und der Wasserzähleinrichtungseinsatzöffnung vorgesehenen Ventilsitz für das Absperrventil. Der Ventilsitz ist eine Anlagefläche, an welcher im geschlossenen Zustand eine Absperrventilfläche des Absperrventils anliegt, so dass der Durchgang durch das Rohrgebilde vollständig unterbunden ist.

Vorzugsweise ist die Anlagefläche des Ventilsitzes in Längsrichtung des Rohrverlaufs des Zuleitungsrohrbereichs zwischen der Einlassöffnung und der Wasserzähleinrichtungseinsatzöffnung ausgerichtet und teilt das Rohr im Bereich des Ventilsitzes in Längsrichtung, d.h. in Hauptströmungsrichtung des Rohrbereichs in zwei Bereiche. Der Ventilsitz ist vorzugsweise integral an dem Rohrgebilde vorgesehen und ist - sofern das Rohrgebilde als einteiliges Spritzguss- oder Druckgussteil aus Metall oder Kunststoff hergestellt ist - Teil des Rohrstücks, welches das Rohrgebilde bildet. Es kann jedoch auch ein separater Einsatz im Bereich der Absperrventilaufnahme in das Rohrgebilde eingefügt sein, der den Ventilsitz ausformt. In diesem Fall enthält jedoch das Rohrgebilde zumindest integral die Absperrventilaufnahmeöffnung.

Gemäß einer bevorzugten Weiterbildung der Erfindung nach Anspruch 3 ist die Probenahmeöffnung an einem freien Ende eines Probenahmestutzen vorgesehen, der im Wesentlichen senkrecht zur Hauptströmungsrichtung des Wassers zwischen der Einlassöffnung und der Auslassöffnung in dem Rohrgebildes vorgesehen ist. So enthält das Rohrgebilde üblicherweise einen Einlassstutzen mit Einlassöffnung, einen Auslassstutzen mit Auslassöffnung, die in Längsrichtung hintereinander und in Verlängerung zueinander unter Zwischenschaltung der Wasserzählereinrichtungseinsatzöffnung vorgesehen sind. Der Rohrbereich zwischen der Einlassöffnung und der Wasserzähleinrichtungseinsatzöffnung wird als Zuleitungsrohrbereich und der Rohrbereich zwischen der Wasserzähleinrichtungseinsatzöffnung und der Auslassöffnung als Ableitungsrohrbereich bezeichnet. Der Ableitungsrohrbereich ist im Wesentlichen zylindrisch und ohne innenliegende Trennwände, die die Wasserströmung beeinflussen, ausgebildet. An den Ableitungsrohrbereich ist vorzugsweise rechtwinklig abgehender Probenahmestutzen vorgesehen. Folglich kann das Wasser über eine Abzweigöffnung an dem Innenumfang des Ableitungsrohrbereichs in den Probenahmestutzen und aus der Probenahmeöffnung des Probenahmestutzens ausgeleitet werden. An diesen Probenahmestutzen kann mittels der für Wasserleitungen üblicherweise bekannten Befestigungsmethoden die Probenahmeeinrichtung angeschlossen werden. Vorzugsweise sind Innenwände des Ableitungsrohrbereichs im Bereich der Mündung des Probeentnahmestutzen d.h. im Bereich der Abzweigöffnung trennwandfrei ausgebildet, d.h. im Gegensatz zu dem Bereich, in dem die Absperrventilaufnahmeöffnung vorgesehen ist, sind keine Trennwände bzw. kein Ventilsitz vorgesehen.

Gemäß einer bevorzugten Weiterbildung nach Anspruch 4 ist radial innerhalb der Wasserzähleinrichtungseinsatzöffnung eine Trennung bzw. Trennwandung vorgesehen. Diese Trennung trennt den radial innen liegenden Rohrbereich von einem radial außen liegenden Rohrbereich ab, der strömungsmäßig mit der Einlassöffnung kommuniziert. Zur Putzseite hin zeigende Abschlussränder der Trennung sind vorzugsweise nach innen in einer Ebene unterhalb der Wasserzähleinrichtungseinsatzöffnung versetzt angeordnet. So ist es möglich, von der Einlassöffnung Wasser auf die radial äußeren Flächen eines Flügelrades eines bündig in die Wasserzähleinrichtungseinsatzöffnung eingesetzten Flügelradwasserzählers aufzugeben, leckagefrei durch die Wasserzähleinrichtung zu leiten und innen durch den innen liegenden Rohrbereich wieder aus der Wasserzähleinrichtung auszuleiten.

Gemäß eines nebengeordneten Aspektes der Erfindung wird ein Unterputz verlegbarer Wasserzähler mit den Merkmalen von Anspruch 5 vorgeschlagen.

Der Wasserzähler hat ein Gehäuse, welches dem Rohrgebilde des Einsatzes entspricht. Der unter Putz verlegbare Wasserzähler ist im Wesentlichen eine Kombination des zuvor beschriebenen erfindungsgemäßen Einsatzes und einer daran angeschlossenen Wasserzähleinrichtung, die entsprechend in die Wasserzähleinrichtungseinsatzöffnung des Rohrgebildes eingesetzt ist. Bevorzugte Weiterbildungen des unter Putz verlegbaren Wasserzählers sind in den Ansprüchen 7 und 8 definiert.

Mit dem in Anspruch 5 definierten Wasserzähler wird insbesondere ein Wasserzähler weitergebildet, wie er aus der EP 0 853 753 B1 bekannt ist. Auch bei der vorliegenden Erfindung kann das Gehäuse, welches die Einlass- und die Auslassöffnung ausbildet, ein mehrteiliges Gehäuse sein bestehend aus gegossenen Gehäuseteilen, beispielsweise zur Aufnahme der Wasserzähleinrichtung und/oder zur Ausbildung der Probenentnahmeöffnung, die über Rohrstücke miteinander verbunden sind.

Zu bevorzugen ist indes im Hinblick auf eine möglichst einfache Montage des erfindungsgemäßen Wasserzählers die Ausgestaltung des Gehäuses als einheitliches Gussgehäuse. Dieses einheitliche Gussgehäuse bildet dementsprechend die Funktionsflächen für die Wasserzähleinrichtung wie auch Anlage- und Montageflächen für den Einbau der Wasserzähleinrichtung und der Anzeigeeinrichtung derselben aus. Zusätzlich formt das einheitliche Gehäuse die Probenahmeöffnung aus, vorzugsweise durch eine mit einem Anschlussgewinde versehene Probenahmeöffnung.

Es hat sich im Hinblick auf eine wirtschaftliche Herstellung und einer guten Probennahme als vorteilhaft erwiesen, als Anschlussgewinde ein 3/8"-Innengewinde an dem Gehäuse auszubilden.

Vorzugsweise bildet das Gehäuse, vorzugsweise das einheitliche Gussgehäuse einen Ventilsitz für ein Absperrventil aus. Dieses Absperrventil ist zwischen der Einlassöffnung und der Wasserzähleinrichtung vorgesehen und üblicherweise einem Innengewinde zugeordnet, in welches das Absperrventil eingeschraubt werden kann, dessen Ventilkörper dichtend gegen den Ventilsitz angelegt werden kann, um den Wasserzähler von dem druckbeaufschlagten Wasserleitungssystem und damit die Nasszelle bzw. die Wohnungseinheit abzusperren. Dabei ist die Wasserzähleinrichtung vorzugsweise zwischen der Probenahmeöffnung und dem Ventilsitz vorgesehen. Vorzugsweise kann das Gehäuse eine Anzeigeeinrichtung zur Ausgabe der gezählten Wassermenge tragen.

Im Hinblick auf eine einfache Montage wird gemäß einer bevorzugten Weiterbildung der vorliegenden Erfindung vorgeschlagen, das Gehäuse in einem Unterputz-Montagekasten aufzunehmen, wie er grundsätzlich aus der EP 0 853 753 B1 bzw. DE 43 22 696 A1 bekannt ist. Durch diese Maßnahme wird die Montierbarkeit des erfindungsgemäßen Wasserzählers verbessert.

Gemäß eines weiteren nebengeordneten Aspekts wird mit der vorliegenden Erfindung zudem ein in Anspruch 8 definiertes Gebäudewassersystem angegeben. Das Gebäudewassersystem enthält den erfindungsgemäßen Einsatz zur Verbindung einer Wasserzähleinrichtung mit einer Rohrleitung bzw. den erfindungsgemäßen unter Putz verlegbaren Wasserzähler. Besonders bevorzugt enthält das Gebäudewassersystem mehrere solcher unter Putz verlegbaren Wasserzähler.

Vorzugsweise sind jeweils zwei Wasserzähler, einer für eine Kaltwasserleitung und einer für eine Warmwasserleitung in einem gemeinsamen Unterputzmontagekasten vorgesehen. Demnach sind an demselben Unterputzmontagekasten zwei parallel zueinander verlaufende Rohrgebilde angeordnet, wobei zumindest eines der Rohrgebilde, vorzugsweise dasjenige, welches dem Warmwasserstrang zugeordnet ist, erfindungsgemäß ausgeführt, d.h. neben der Wasserzähleinrichtungseinsatzöffnung auch eine Probenahmeöffnung zwischen der Wasserzähleinrichtungseinsatzöffnung und der Auslassöffnung vorgesehen ist. Aber auch zu der Kaltwasserleitung kann in dem Unterputzmontagekasten eine Probenahmeöffnung vorgesehen sein.

Wenn entsprechend dem Unterputzmontagekasten zwei Rohrgebilde parallel zueinander verlaufend vorgesehen sind, enthält ein solcher Unterputzmontagekasten zumindest zwei Einlassausnehmungen, zumindest zwei Auslassausnehmungen, zumindest zwei Wasserzähleinrichtungsausnehmungen und zumindest eine, vorzugsweise zwei Probenahmeausnehmungen.

Weitere Einzelheiten und Vorteile der vorliegenden Erfindung ergeben sich aus der nachfolgenden Beschreibung eines Ausführungsbeispiels in Verbindung mit der Zeichnung. In dieser zeigt:
- Fig. 1: einen erfindungsgemäßen unter Putz verlegbaren Wasserzähler in einer Ansicht senkrecht auf die Wand in der er verlegt ist; und
- Fig. 2: einen Querschnitt durch die Wand und entsprechend durch den unter Putz verlegbaren Wasserzähler aus Fig. 1.

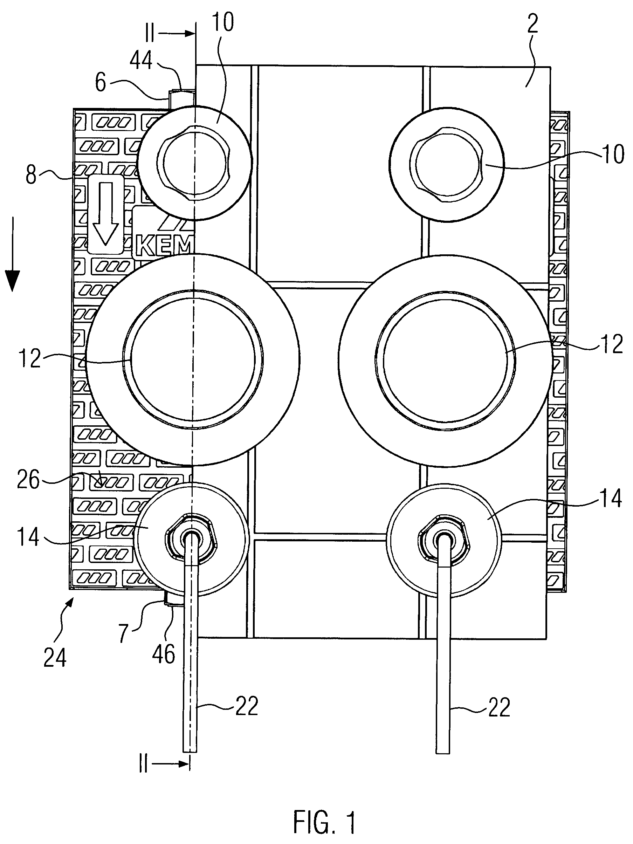

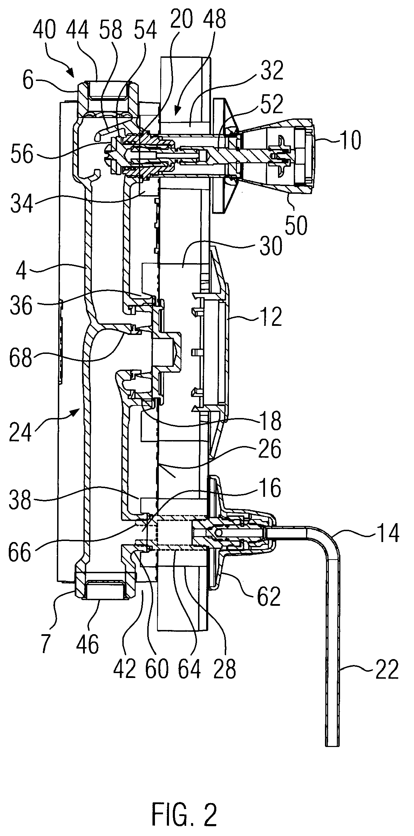

Figur 1 zeigt eine mit Fliesen belegte verputzte Wand, in der unter dem "Putz" 2, vorliegend eine Rigipsplatte und Fliesen, ein mit Bezugszeichen 8 gekennzeichneter Unterputzmontagekasten eingebaut ist. Innerhalb des Unterputzmontagekastens 8 sind in vertikaler Richtung innerhalb der Wand (vgl. Fig. 1 von oben nach unten) parallel zueinander und nebeneinander zwei in Figur 1 nicht näher gezeigte Rohrgebilde 4 (vgl. Figur 2) angeordnet. Die beiden Rohrgebilde 4 enthalten jeweils einen Einlassstutzen 6 und einen Auslassstutzen 7, welche aus dem Unterputzmontagekasten 8 an einander gegenüberliegenden Stirn- bzw. Umfangsseiten hinausragen. In Figur 1 ist für das linke Rohrgebilde 4 zu erkennen, dass der Einlassstutzen 6 und der Auslassstutzen 7 den Unterputzmontagekasten an seinen Stirnseiten überragt. Das in Figur 1 dargestellte linke Rohrgebilde 4 wird an eine Warmwasser führende Rohrleitung, das rechte Rohrgebilde an eine Kaltwasser führende Rohrleitung angeschlossen.

Im Folgenden sei nur auf das in Figur 1 dargestellte linke, an die Warmwasser führende Rohrleitung anzuschließende Rohrgebilde 4 Bezug genommen, da beide Rohrgebilde 4 in dem Ausführungsbeispiel gleichartig ausgeführt sind.

In Figur 1 in Richtung von der Decke zum Boden hin (vgl. Pfeilrichtung für Flussrichtung des Wassers in Fig. 1) nacheinander angeordnet an dem Rohrgebilde 4 angeschlossen sind ein Absperrventil 10, eine schematisch dargestellte Wasserzähleinrichtung 12 sowie ein Probenahmehahn 14. Der Probeentnahmehahn 14 ist durch eine Probenahmeputzöffnung 28 im Putz 2 an eine Probenahmeöffnung 16 (vgl. Fig. 2), die Wasserzähleinrichtung 12 ist durch eine Wasserzähleinrichtungseinsatzputzöffnung 30 im Putz 2 an eine Wasserzählereinrichtungseinsatzöffnung 18 (vgl. Fig. 2), sowie das Absperrventil 10 ist durch eine Absperrventilaufnahmeputzöffnung 32 im Putz 2 an eine Absperrventilaufnahmeöffnung 20 (vgl. Fig. 2) angeschlossen.

Die Probenahmeöffnung 16, die Wasserzähleinrichtungseinsatzöffnung 18 und die Absperrventilaufnahmeöffnung 20 sind, wie Figur 2 zeigt, an dem innerhalb des Unterputzmontagekastens 8 liegenden Rohrgebildes 4 vorgesehen. An jedes der beiden in Figur 1 von oben nach unten durch den Unterputzmontagekasten 8 verlaufenden Rohrgebilde 4 ist jeweils eine eigene Wasserzähleinrichtung 12, ein eigener Probenahmehahn 14 sowie ein eigenes Absperrventil 10 angeschlossen.

Stirnseitig ragt von dem Probenahmehahn 14 ein L-förmiges Auslassrohr 22 ab, dessen längerer Schenkel des L parallel zu einer Längenrichtung des Rohrgebildes 4, in Hauptströmungsrichtung zwischen einer an dem Einlassstutzen 6 vorgesehenen Einlassöffnung 44 und einer an dem Auslassstutzen 7 vorgesehenen Auslassöffnung 46 ausgerichtet ist. In Figur 1 fließt das Wasser wie schematisch durch den Pfeil angezeigt von oben nach unten, d.h. von einer höheren, der Decke zugewandten Seite der Wand zu einer tieferen dem Boden zugewandten Seite der Wand.

Eine detaillierte Darstellung des aus Rohrgebilde 4 und Unterputzmontagekastens 8 gebildeten Einsatzes 24 mit daran angeschlossener Wasserzähleinrichtung 12 ist in Figur 2 dargestellt.

Der Unterputzmontagekasten 8 ist oberflächenbündig mit seiner putzseitigen Oberfläche 26 mit einer die Wand bildenden Mauer, auf welche der Putz 2 bzw. die Fliesen bzw. die Rigipsplatte aufgebracht ist, angeordnet. In dem Putz 2 sind die zuvor genannten Putzöffnungen 28, 30, 32 freigelassen, welche mit Ausnehmungen 34, 36, 38 des Montagekastens, nämlich der Wasserzähleinrichtungsausnehmung 36, der Probenahmeausnehmung 38 sowie der Absperrventilaufnahmeausnehmung 34 fluchten, welche unterhalb der jeweiligen Putzöffnung 28, 30, 32 vorgesehen ist. Des Weiteren ragen durch eine Einlass- bzw. Auslassausnehmungen 40; 42 des Unterputzmontagekastens 8 an dessen Umfangs- bzw. Stirnseiten in entgegen gesetzten Richtungen der Einlassstutzen 6 bzw. der in Verlängerung des Einlassstutzens 6 an dem Rohrgebilde 4 ausgebildete Auslassstutzen 7 ab. Das Rohrgebilde 4 ist ein im Wesentlichen in seiner Hüllfläche metallisches gegossenes rohrförmiges Teil, an welchem die verschiedenen Funktionsöffnungen ausgespart sind (Probenahmeöffnung 16, Absperrventilaufnahmeöffnung 20, Wasserzähleinrichtungseinsatzöffnung 18 sowie Einlass- und Auslassöffnung 44, 46), wobei die Probenahmeöffnung 16, die Absperrventilaufnahmeöffnung 20 und die Wasserzähleinrichtungseinsatzöffnung 18 an derselben Seite des Rohrgebildes 4 vorgesehen sind. Diese zuletzt genannten drei Öffnungen sind im Wesentlichen in einer Seitenumfangswand des rohrförmigen Teils des Rohrgebildes 4 vorgesehen.

Bei angeschlossenem Einsatz 24 fließt das Wasser in Hauptströmungsrichtung zwischen der Einlassöffnung 44 und der Auslassöffnung 46 unter Zwischenschalten der Wasserzähleinrichtung 12.

Zwischen dem Einlassstutzen 6 und der Wasserzähleinrichtungseinsatzöffnung 18 ist eine Absperrventilaufnahme vorgesehen, die mit der Absperrventilaufnahmeöffnung 20 versehen ist, in welche durch die Absperrventilausnehmungen 34 des Unterputzmontagekastens 8 eine Absperrventileinheit 48 mit einem drehbaren Knauf 50 eingesetzt ist.

Durch Verschwenkung des Knaufes 50 bewegt sich an einer Führungsstange 52 ein an dessen Ende gehaltener Ventilkörper 54, der eine Anlagefläche 56 hat, die mit einem integral in dem Rohrgebilde 4 vorgesehen Ventilsitz 58 zusammenwirkt. Bei geschlossenem Absperrventil 10 liegt der Ventilsitz 58 an der Anlagefläche 56 dichtend an, und der eine Durchflussmöglichkeit des Wassers in dem Rohrgebilde 4 wird unterbrochen.

Im Gegensatz dazu ist seitlich an die Probenahmeöffnung 16 der Probenahmehahn 14 angeflanscht. Bei geöffnetem bzw. geschlossenem Hahn 14 ist die Durchflussmöglichkeit des Wassers durch das Rohrgebilde 4 nicht unterbrochen. Bei geöffnetem Hahn 14 wird lediglich Wasser abgeleitet und durch das L-förmige Auslassrohr 22 in einen nicht dargestellten Probeaufnahmebehälter abgelassen.

Die Probeentnahmeöffnung 16 ist an einem sich senkrecht zu einem im Wesentlichen zylinderförmigen Ableitungsrohrbereich des Rohrgebildes 4 erstreckenden Probenahmestutzen 60 vorgesehen. Dieser Probenahmestutzen 60 bildet zusammen mit einem Teil des Ableitungsrohrbereichs einen T-förmigen Rohrbereich aus, wobei das Dach des T-Profils durch den im Wesentlichen zylinderförmigen Ableitungsrohrbereich gebildet wird. Im Bereich wo der Probenahmestutzen 60 von dem Ableitungsrohrbereich abgeht, sind - im Gegensatz zu dem Zuleitungsrohrbereich, wo das Absperrventil 10 angeordnet ist - an dem Ableitungsrohrbereich bzw. an dessen Innenwand keine Trennwände vorgesehen, d.h. der Ableitungsrohrbereich ist im Inneren trennwandfrei ausgestaltet.

In dem dargestellten Ausführungsbeispiel ist die Probenahmeöffnung 16 mit einem 3/8"-Innengewinde versehen, in welches der Probeentnahmestutzen 60 eingeschraubt ist.

Die Probeentnahmeeinheit 14 ist im Wesentlichen durch ein hutförmiges Teil gebildet, von dessen Krempe 62 ein durch die Probenahmeputzöffnung 28 sich erstreckendes zylinderförmiges Rohr 64 abgeht, an dessen sich verjüngendem freiem Ende 66 ein Außengewinde vorgesehen ist, das in das Innengewinde an der Probenahmeöffnung 16 des Probenahmestutzens 60 eingreift.

Eine Unterseite der Krempe 62 bildet eine Anlagefläche an dem Putz 2 aus. In der Probenahmeeinheit 14 ist eine Vorrichtung zum Öffnen und Schließen eines Durchgangs vorgesehen, so dass bei offenem Durchgang das Wasser aus dem Probenahmestutzen 60 zu dem L-förmigen Auslassrohr 22 geführt wird. Im vorliegenden Fall wird der Durchgang dadurch freigegeben, dass das komplette Auslassrohr 22 verschwenkt wird. Bei geöffnetem Probenahmehahn 14 weist die längere Seite des L in Richtung auf den Boden, ist also im Raum senkrecht ausgerichtet. Im geschlossenen Zustand wird das Auslassrohr 22 dessen kürzeren Schenkel des Ls aus einem Hutkopf des hutförmigen Teils oberseitig hervorragt um 90° gedreht, so dass die längere Seite des Ls dann senkrecht zur Hauptströmungsrichtung sich erstreckt.

Die Wasserzähleinrichtung 12 ist zwischen dem Absperrventil 10 und der Probenahmeeinheit 14 angeordnet. Im Bereich der Wasserzähleinrichtungseinsatzöffnung 18 ist eine Trennung 68 vorgesehen, die radial mittig innerhalb der Wasserzählereinsatzöffnung bei Sicht von der Putzseite auf die Wand angeordnet ist.

Die Trennung wirkt derart mit Funktionsflächen der Wasserzählereinrichtung 12 zusammen, dass von dem Zuleitungsrohrbereich zu dem Ableitungsrohrbereich das Wasser leckagefrei komplett durch die Wasserzähleinrichtung fließt. Hierzu wird das zulaufende Wasser auf ein drehbar gelagertes nicht dargestelltes Flügelrad der Wasserzähleinrichtung gegeben und fließt mittig zu dem Flügelrad ab in einem durch die Trennung gebildeten Innenrohrbereich.

### Bezugszeichenliste

- 2: Wand/ Putz
- 4: Rohrgebilde
- 6: Einlassstutzen
- 7: Auslassstutzen
- 8: Unterputzmontagekasten
- 10: Absperrventil
- 12: Wasserzähleinrichtung
- 14: Probenahmehahn
- 16: Probenahmeöffnung
- 18: Wasserzähleinrichtungseinsatzöffnung
- 20: Absperrventilaufnahmeöffnung
- 22: Auslassrohr
- 24: Einsatz
- 26: putzseitige Oberfläche
- 28: Probenahmeputzöffnung
- 30: Wasserzähleinrichtungseinsatzputzöffnung
- 32: Absperrventilaufnahmeputzöffnung
- 34: Absperrventilaufnahmeausnehmung
- 36: Wasserzähleinrichtungseinsatzausnehmung
- 38: Probenahmeausnehmung
- 40: Einlassausnehmung
- 42: Auslassausnehmung
- 44: Einlassöffnung
- 46: Auslassöffnung
- 48: Absperrventilaufnahme
- 50: Knauf
- 52: Führungsstange
- 54: Ventilkörper
- 56: Anlagefläche
- 58: Ventilsitz
- 60: Probenahmestutzen
- 62: Krempe
- 64: Rohr
- 66: sich verjüngendes Ende
- 68: Trennung

## Patentansprüche

1. Einsatz (24) zur Verbindung einer Wasserzähleinrichtung (12) mit einer Rohrleitung, enthaltend ein Rohrgebilde (4) mit einer Einlassöffnung (44) zum Anschluss an die Rohrleitung, einer Auslassöffnung (46) zum Anschluss an die Rohrleitung, einer dazwischen liegenden Wasserzähleinrichtungseinsatzöffnung (18), und einer zwischen der Wasserzähleinrichtungseinsatzöffnung (18) und der Auslassöffnung (46) vorgesehene Probenahmeöffnung (16),
**dadurch gekennzeichnet, dass**
das Rohrgebilde (4) in einem quaderförmigen Unterputzmontagekasten (8) aufgenommen ist, wobei der Unterputzmontagekasten (8) an seinem Umfang mit zumindest einer Einlassausnehmung (44) und zumindest einer Auslassausnehmung (46) und auf einer putzseitigen Oberfläche (26) mit einer Wasserzähleinrichtungseinsatzausnehmung (36) und einer Probenahmeausnehmung (38) versehen ist, wobei der Einsatz eine zwischen der Einlassöffnung (44) und der Wasserzähleinrichtungseinsatzöffnung (18) vorgesehenen Absperrventilaufnahme (48) enthält, welche) eine Absperrventilaufnahmeöffnung (20) mit einem Durchmesser aufweist, der größer ist als der der Probenahmeöffnung (16).

2. Einsatz (24) nach Anspruch 1, **dadurch gekennzeichnet, dass** die Absperrventilaufnahme (48) einen innerhalb des Rohrgebildes (4) und integral an diesem vorgesehenen Ventilsitz (58) für ein Absperrventil (10) aufweist.

3. Einsatz (24) nach einem der vorhergehenden Ansprüche, **dadurch gekennzeichnet, dass** ein die Probenahmeöffnung (16) enthaltender Probenahmestutzen (60) senkrecht von einem zwischen der Wasserzähleinrichtungseinsatzöffnung (18) und der Auslassöffnung (46) sich erstreckenden, im Wesentlichen zylindrischen Auslassrohrbereich abgeht, der in einem Bereich der Mündung des Probenahmestutzens (60) trennwandfrei ausgebildet ist.

4. Einsatz (24) nach einem der vorhergehenden Ansprüche, **dadurch gekennzeichnet dass** innerhalb der Wasserzähleinrichtungseinsatzöffnung (18) an einem der Wasserzähleinrichtungseinsatzsatzöffnung (18) gegenüberliegenden Wandungsbereich des Rohrgebildes (4) eine Rohrtrennung (68) vorgesehen ist, die derart ausgebildet ist, dass nach Einsatz der Wasserzähleinrichtung (12) in die Wasserzähleinrichtungseinsatzöffnung (18) durch das Rohrgebilde (4) geleitetes Wasser leckagefrei durch die Wasserzähleinrichtung (12) strömt.

5. Unter Putz verlegbarer Wasserzähler mit einem Einsatz (24) nach einem der Ansprüche 1 bis 4
**gekennzeichnet durch**
eine in die Wasserzähleinrichtungseinsatzöffnung (18) eingesetzte Wasserzähleinrichtung (12).

6. Unter Putz verlegbarer Wasserzähler nach Anspruch 5, **dadurch gekennzeichnet, dass** das Rohrgebilde (4) ein einheitliches Gussgehäuse ist.

7. Unter Putz verlegbarer Wasserzähler nach Anspruch 5 oder 6, **dadurch gekennzeichnet, dass** die Probenentnahmeöffnung (16) mit einem 3/8" Anschlussgewinde versehen ist.

8. Gebäudewassersystem mit einer Übergabestelle, an welcher Wasser aus einer Wasserzuleitung aus einem öffentlichen Versorgungsnetz in das Gebäudewassersystem eingeleitet wird, einer an die Übergabestelle angeschlossenen Rohrleitung, wenigstens einem Verbraucher und einem in die Rohrleitung geschalteten unter Putz verlegten Wasserzähler nach einem der Ansprüche 5 bis 7, wobei die Einlassöffnung (44) zuleitungsseitig an das Rohrsystem angeschlossen ist und die Auslassöffnung (46) derart angeschlossen ist, dass das zugeleitete Wasser auslassseitig zu dem Verbraucher geleitet wird.

## Claims

1. Insert (24) for connecting a water metering device (12) to a pipeline, comprising a pipe system (4) with an inlet orifice (44) for connecting to the pipeline, an outlet orifice (46) for connecting to the pipeline, a water metering device insert orifice (18) lying in between and a sampling orifice (16) disposed between the water metering device insert orifice (18) and the outlet orifice (46),
**characterised in that**
the pipe system (4) is accommodated in a cuboid flush-mounted housing (8), which flush-mounted housing (8) is provided with at least one inlet recess (44) and at least one outlet recess (46) on its periphery and with a water metering device insert recess (36) and a sampling recess (38) on a wall-side surface (26), and the insert contains a shut-off valve mount (48) disposed between the inlet orifice (44) and the water metering device insert orifice (18) having a shut-off valve mounting orifice (20) with a diameter that is greater than the sampling orifice (16).

2. Insert (24) as claimed in claim 1, **characterised in that** the shut-off valve mount (48) comprises a valve seat (58) for a shut-off valve (10) disposed within the pipe system (4) and integral therewith.

3. Insert (24) as claimed in one of the preceding claims, **characterised in that** a sampling connector (60) containing the sampling orifice (16) runs vertically from an essentially cylindrical outlet pipe region extending between the water metering device insert orifice (18) and the outlet orifice (46) in a region having no dividing wall where the sampling connector (60) opens.

4. Insert (24) as claimed in one of the preceding claims, **characterised in that** a pipe dividing means (68) is disposed inside the water metering device insert orifice (18) on a wall region of the pipe system (4) lying opposite the water metering device insert orifice (18), which is configured so that when the water metering device (12) is inserted in the water metering device insert orifice (18), water fed through the pipe system (4) flows through the water metering device (12) leakage-free.

5. Flush-mountable water meter having an insert (24) as claimed in one of claims 1 to 4,
**characterised by**
a water metering device (12) inserted in the water metering device insert orifice (18).

6. Flush-mountable water meter as claimed in claim 5, **characterised in that** the pipe system (4) is a single cast housing.

7. Flush-mountable water meter as claimed in claim 5 or 6, **characterised in that** the sampling orifice (16) is provided with a 3/8" connector thread.

8. Building water system comprising a transfer point at which water from a water inlet pipe is fed from a public supply network into the building water system, a pipeline connected to the transfer point, at least one consumer and a flush-mounted water meter as claimed in one of claims 5 to 7 connected into the pipeline, and the inlet orifice (44) is connected to the pipe system on the inlet pipe side, and the outlet orifice (46) is connected in such a way that the water fed in is directed to the consumer on the outlet side.

## Revendications

1. Insert de raccordement (24) pour raccorder un dispositif de compteur d'eau (12) à une conduite tubulaire, comprenant un élément de tube (4) avec une ouverture d'entrée (44) destinée au raccordement à la conduite tubulaire, une ouverture de sortie (46) destinée au raccordement à la conduite tubulaire, une ouverture d'insertion de dispositif de compteur d'eau (18), et une ouverture de prélèvement d'échantillon (16) prévue entre l'ouverture d'insertion de dispositif de compteur d'eau (18) et l'ouverture de sortie (46), **caractérisé en ce que** l'élément de tube (4) est logé dans un coffret de montage encastré (8) de forme parallélépipédique, **en ce que** le coffret de montage encastré (8) est pourvu, sur sa périphérie, d'au moins un évidement d'entrée (44) et d'au moins un évidement de sortie (46), et sur une surface (26) côté finition de mur, d'un évidement d'insertion de dispositif de compteur d'eau (36) et d'un évidement de prélèvement d'échantillon (38), et **en ce que** l'insert de raccordement est pourvu, entre l'ouverture d'entrée (44) et l'ouverture d'insertion de dispositif de compteur d'eau (18), d'un dispositif d'accueil de vanne d'arrêt (48), qui présente une ouverture de dispositif d'accueil de vanne d'arrêt (20) d'un diamètre supérieur à celui de l'ouverture de prélèvement d'échantillon (16).

2. Insert de raccordement (24) selon la revendication 1, **caractérisé en ce que** le dispositif d'accueil de vanne d'arrêt (48) présente un siège de vanne (58) pour une vanne d'arrêt (10), qui est prévu à l'intérieur de l'élément de tube (4) et est formé d'un seul tenant avec celui-ci.

3. Insert de raccordement (24) selon l'une des revendications précédentes, **caractérisé en ce qu'**un embout de prélèvement d'échantillon (60) renfermant l'ouverture de prélèvement d'échantillon (16) fait saillie perpendiculairement d'une zone de tube de sortie sensiblement cylindrique, qui s'étend entre l'ouverture d'insertion de dispositif de compteur d'eau (18) et l'ouverture de sortie (46), et qui est d'une configuration sans cloison séparative dans une zone de l'embouchure de l'embout de prélèvement d'échantillon (60).

4. Insert de raccordement (24) selon l'une des revendications précédentes, **caractérisé en ce qu'**à l'intérieur de l'ouverture d'insertion de dispositif de compteur d'eau (18), sur une zone de paroi de l'élément de tube (4), qui est opposée à l'ouverture d'insertion de dispositif de compteur d'eau (18), il est prévu une cloison séparative de tube (68), qui est conçue de façon telle qu'après insertion du dispositif de compteur d'eau (12) dans l'ouverture d'insertion de dispositif de compteur d'eau (18), l'eau passant à travers l'élément de tube (4) s'écoule sans fuite à travers le dispositif de compteur d'eau (12).

5. Compteur d'eau encastrable comprenant un insert de raccordement (24) selon l'une des revendications 1 à 4, **caractérisé par** un dispositif de compteur d'eau (12) inséré dans l'ouverture d'insertion de dispositif de compteur d'eau (18).

6. Compteur d'eau encastrable selon la revendication 5, **caractérisé en ce que** l'élément de tube (4) est une pièce de fonderie uniforme ou unifiée.

7. Compteur d'eau encastrable selon la revendication 5 ou la revendication 6, **caractérisé en ce que** l'ouverture de prélèvement d'échantillon (16) est pourvu d'un filetage de raccordement 3/8".

8. Système de distribution d'eau dans un bâtiment comprenant une zone de transition de raccordement au niveau de laquelle de l'eau en provenance d'une canalisation d'alimentation d'un réseau d'alimentation public, est envoyée dans le système de distribution d'eau du bâtiment, et comprenant également une conduite tubulaire raccordée à la zone de transition de raccordement, au moins un élément consommateur, et un compteur d'eau selon l'une des revendications 5 à 7, qui est encastré et monté dans la conduite tubulaire, système dans lequel l'ouverture d'entrée (44) est raccordée au système de conduite tubulaire du côté de l'alimentation, et l'ouverture de sortie (46) est raccordée de manière telle, que l'eau amenée soit envoyée, du côté sortie, vers l'élément consommateur.
